# EUROPÄISCHE PATENTANMELDUNG

(11) **EP 1 033 297 A2**
(43) Veröffentlichungstag der Anmeldung: **06.09.2000**
(21) Anmeldenummer: 00103509.6
(22) Anmeldetag: 18.02.2000
(51) Int. Cl.: B62D 1/10

(54) **Schwingungstilger für Lenkräder von Kraftfahrzeugen**

(30) Priorität: 02.03.1999 DE 19908916
(71) Anmelder: Firma Carl Freudenberg, 69469 Weinheim (DE)
(72) Erfinder: Grunau, Rudi Dr., 79395 Neuenburg (DE); Dürre, Markus, 79379 Müllheim (DE); Back, Friedrich, 79379 Müllheim (DE)

(57) **Zusammenfassung**

Lenkrad mit integriertem Schwingungstilger, umfassend eine Tilgemasse (1), die durch zumindest ein Federelement (2) mit einem Befestigungskörper (3) elastisch verbunden ist, wobei der Befestigungskörper (3) die Tilgermasse (1) zumindest teilweise käfigartig umschließt und als Verliersicherung für die Tilgermasse (1) ausgebildet ist.

## Beschreibung

### Technisches Gebiet

Die Erfindung betrifft einen Schwingungstilger für Lenkräder von Kraftfahrzeugen mit einer Tilgermasse, die durch Federelemente mit einem Befestigungsblech elastisch verbunden ist.

### Stand der Technik

Die bei Kraftfahrzeugen auftretenden Schwingungen, sei es während der Fahrt oder auch im Stillstand mit laufendem Motor, können sich auf die Lenksäule übertragen und von dort aus auf das Lenkrad. Um diesen Schwingungen am Lenkrad, die den Fahrkomfort mindern, entgegenzuwirken, ist es bekannt, an der Lenksäule oder im Lenkrad unterhalb des Airbag-Moduls einen Schwingungstilger anzubringen.
Ein solcher Schwingungstilger kann jedoch dazu führen, daß bei einem Abreißen der elastischen Verbindungselemente zwischen Tilgermasse und Befestigungsblech die Tilgermasse den Kontaktstecker des Airbag-Moduls beschädigt. Dies könnte im Falle eines Crashs zu einem Versagen des Airbag-Moduls führen.

### Darstellung der Erfindung

Die der Erfindung zugrunde liegende Aufgabe besteht darin, einen bekannten Schwingungstilger für Lenkräder von Kraftfahrzeugen derart weiterzubilden, daß eine große Einsatzbreite und Betriebssicherheit erzielt werden kann.

Diese Aufgabe wird erfindungsgemäß mit den Merkmalen von Anspruch 1 gelöst. Auf vorteilhafte Ausgestaltungen nehmen die Unteransprüche Bezug.

Im Rahmen der vorliegenden Erfindung ist es vorgesehen, daß das Befestigungsblech die Tilgermasse zumindest teilweise käfigartig umschließt und als Verliersicherung für die Tilgermasse ausgebildet ist.
Auf diese Weise wird erreicht, daß selbst bei einer möglichen Durchtrennung der Federelemente, die die Tilgermasse elastisch mit dem Befestigsblech verbinden, die nun losgelöste Tilgermasse den Kontaktstecker des Airbag-Moduls nicht beschädigen kann.

Die Fertigung des Befestigungsblechs aus einem Stück aus einem tiefziehbaren metallischen Werkstoff ermöglicht eine kostengünstige Produktion.

Die Tilgermasse ist durch mehrere, vorzugsweise gleichmäßig in Umfangsrichtung des Schwingungstilgers verteilte Federelemente an dem Befestigungsblech befestigt, wodurch eine möglichst sichere Verbindung der Tilgermasse mit dem Befestigungsblech bei trotzdem optimaler Schwingungsdämpfung gewährleistet ist.

Zur Begrenzung von Extremauslenkungen und zur Vermeidung der Entstehung von Schäden, wie sie bei einem Anschlagen von Befestigungsblech und Tilgermasse auftreten können, weisen Befestigungsblech und/oder Tilgermasse auf den einander zugewandten Seiten Pufferelemente auf. Diese Pufferelemente bestehen aus einem hochdämpfenden, elastomeren Werkstoff wie zum Beispiel Gummi und dienen auch der Geräuschminderung.

Vorteilhafterweise ist die Tilgermasse mit zumindest einem Vorsprung versehen, der in einer kongruent gestalteten Aussparung des Befestigungsblechs angeordnet ist. Dadurch kann eine sichere Positionierung der Tilgermasse erreicht werden, bei gleichzeitiger Verhinderung möglicher Torsionsbewegungen. Um der Tilgermasse die notwendige Bewegungsfreiheit zu gestatten, umgeben die Aussparungen den bzw. die Vorsprünge mit einem vorgegebenen Abstand.

Die Vorsprünge der Tilgermasse oder die Aussparungen des Befestigungsblechs können jeweils Anschlagflächen aufweisen, die mit einem elastomeren Werkstoff versehen sind, die sowohl das Befestigungsblech als auch die Vorsprünge vor Schäden schützen, die durch ein gegenseitiges Anschlagen enstehen können. Zusätzlich können durch das Anschlagen entstehende Geräusche gedämpft werden.

In einer alternativen Ausführung kann die Tilgermasse vollständig von elastomerem Werkstoff ummandelt sein. Dies ermöglicht neben dem Schutz vor durch Anschlagen am Befestigungsblech entstehende Schäden auch den Schutz der Tilgermasse vor Korrosion.

Tilgermasse und Befestigungsblech bilden eine vormontierbare Einheit. Damit kann eine weitere Senkung der Produktionskosten erzielt werden. Dabei werden Tilgermasse und Befestigungsblech durch Federelemente verbunden, die aus einem elastischen Werkstoff bestehen.

In einer weiteren Ausführung kann die Tilgermasse auch materialeinheitlich aus einem elastomeren Werkstoff gefertigt sein.

### Kurzbeschreibung der Zeichnung

Die Erfindung wird nachfolgend anhand der Zeichnung weiter verdeutlicht.

Es zeigt:
- **Fig. 1**: eine Draufsicht auf den Schwingungstilger,
- **Fig. 2**: einen Schnitt durch den Schwingungstilger entlang der Linie A-A aus Fig. 1,
- **Fig. 3**: eine Ansicht des Schwingungstilgers von unten und
- **Fig. 4**: einen Schnitt durch den Schwingungstilger entlang der in Fig. 3 dargstellten Linie B-B,

### Ausführung der Erfindung

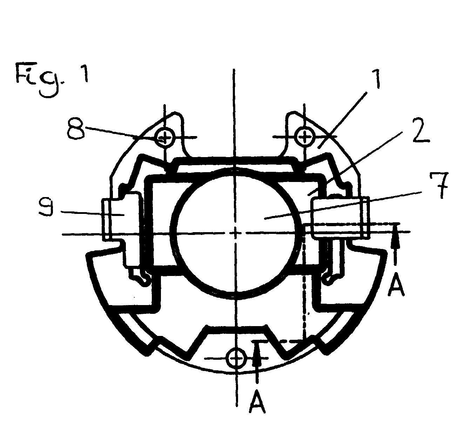

Figur 1 zeigt eine Draufsicht auf den Schwingungstilger für Lenkräder von Kraftfahrzeugen. Der Schwingungstilger besteht aus einem Befestigungsblech 1 und einer Tilgermasse 2. Befestigungsblech 1 und Tilgermasse 2 weisen eine zentral angeordnete, kreisförmige Aussparung 7 auf, in der im montierten Zustand die Lenkradsäule (nicht dargestellt) angeordnet ist. Zur Befestigung des Schwingungstilgers im Lenkrad ist das Befestigungsblech 1 umfangsseitig mit drei Bohrungen versehen. Das Befestigungsblech 1 besteht aus einem tiefziehbaren, metallischen Werkstoff wie zum Beispiel Stahlblech und weist an zwei einander gegenüberliegend angeordneten Stellen am Rand rechteckförmige Verlängerungen 9 auf, die die Tilgermasse 2 zumindest teilweise käfigartig umschließen.

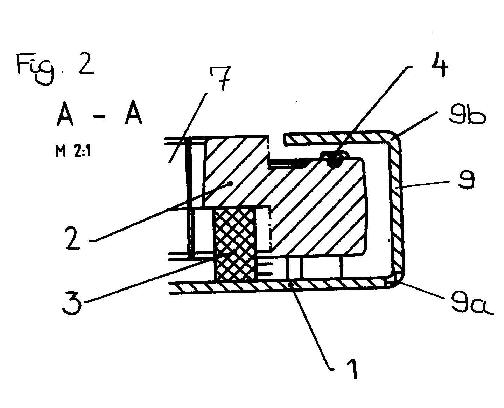

Figur 2 zeigt einen Schnitt durch den Schwingungstilger entlang der Linie A-A aus Figur 1. Die am Rand des Befestigungsblechs 1 angeordnete rechteckförmige Verlängerung 9 weist zwei Knickstellen 9a, 9b auf, so daß das Befestigungsblech 1 und die Verlängerung 9 einen radial nach innen geöffneten, U-förmigen Käfig bilden, in welchen sich die Tilgermasse 2 einfügt. Durch vier gleichmäßig in Umfangsrichtung verteilte Federelemente 3 ist die Tilgermasse 2 mit dem Befestigungsblech 1 verbunden. Die Federelemente 3 bestehen aus einem elastomeren Werkstoff und sind als Gummistege ausgebildet. Bei einer möglichen Durchtrennung der Federelemente 3 wird die Tilgermasse 2 durch die besondere Form von Befestigungsblech 1 und rechteckförmiger Verlängerung 9 wie in einem Käfig festgehalten und kann zum Beispiel nicht den Kontaktstecker eines im Lenkrad angeordneten Airbag-Moduls beschädigen.
Im Bereich und in Richtung der rechteckförmigen Verlängerung 9 weist die Tilgermasse 2 ein Pufferelement 4 auf, das aus einem elastomeren Werkstoff gefertigt ist.

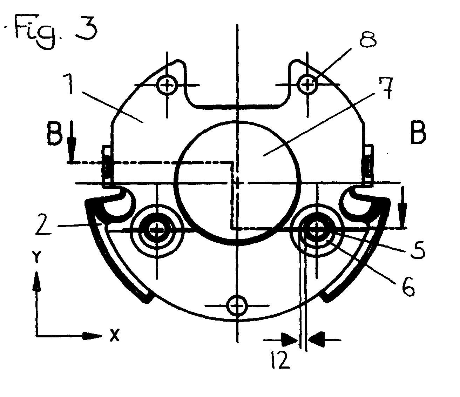

Figur 3 zeigt die Ansicht des Schwingungstilgers von unten. Neben der zentral angeordneten, kreisförmigen Aussparung 7, weist das Befestigungsblech 1 noch zwei weitere Aussparungen 6 auf, in die jeweils ein an der Tilgermasse 2 angebrachter Vorsprung 5 eingreift. Die Aussparungen 6 sind im wesentlichen kongruent zu den Vorsprüngen 6 und umgeben diese in einem Abstand 12.

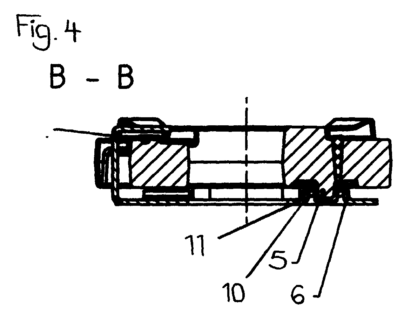

In Figur 4 ist der Schnitt entlang der Linie B-B aus Figur 3 gezeigt. Die den Vorsprung 5 umgebende Aussparung 6 des Befestigungsblechs 1 ist mit einer in Richtung der Tilgermasse 2 weisenden Auskragung 10 versehen, die den Vorsprung 5 mit radialem Abstand 12 umfaßt. Der Vorsprung 5 hat eine Beschichtung 11 aus elastomerem Werkstoff, um Schäden, die durch gegenseitiges Anschlagen von Vorsprung 5 und Aussparung 6 entstehen können, zu verhindern. Durch die in den Aussparungen 6 angeordneten Vorsprünge 5 kann eine sichere Positionierung der Tilgermasse 2 erreicht werden, bei gleichzeitiger Verhinderung möglicher Torsionsbewegungen.

Zur Ausbildung des erfindungsgemäß vorgesehenen Käfigs und um eine möglichst gute Sicherung der Tilgermasse zu erreichen, sollten am Befestigungsblech 1 zumindest drei in Umfangsrichtung angeordnete, rechteckförmige Verlängerungen 9 vorgesehen sein.
In einer alternativen Ausführungsform kann, wie in der Zeichnung dargestellt, die Käfigwirkung auch durch eine Kombination von zwei rechteckförmigen Verlängerungen 9 mit zwei Vorsprüngen 5 erzielt werden, wobei die an der Tilgermasse 2 befestigten Vorsprünge 5 jeweils in die mit einer Auskragung 10 versehene Aussparung 6 eingreifen und so bei einer möglichen Durchtrennung der Federelemente 3 ein Austreten der Tigermasse 2 aus der durch das Befestigungsblech 1 und die beiden Verlängerungen 5 gebildeten Schiene verhindern.

## Patentansprüche

1. Schwingungstilger für Lenkräder von Kraftfahrzeugen mit einer Tilgermasse, die durch Federelemente mit einem Befestigungsblech elastisch verbunden ist, **dadurch gekennzeichnet,** daß das Befestigungsblech (1) die Tilgermasse (2) zumindest teilweise käfigartig umschließt und als Verliersicherung für die Tilgermasse (2) ausgebildet ist.

2. Schwingungstilger nach Anspruch 1, dadurch gekennzeichnet, daß das Befestigungsblech (1) einstückig ausgebildet ist und aus einem tiefziehbaren metallischen Werkstoff besteht.

3. Schwingungstilger nach einem der Ansprüche 1 oder 2, dadurch gekennzeichnet, daß die Tilgermasse (2) durch mehrere, vorzugsweise gleichmäßig in Umfangsrichtung des Schwingungstilgers verteilte Federelemente (3) mit dem Befestigungsblech (1) verbunden ist.

4. Schwingungstilger nach einem der Ansprüche 1 bis 3, dadurch gekennzeichnet, daß das Befestigungsblech (1) und/oder die Tilgermasse (2) auf den einander zugewandten Seiten Pufferelemente (4) aufweisen.

5. Schwingungstilger nach Anspruch 4, dadurch gekennzeichnet, daß die Pufferelemente (4) aus elastomerem Werkstoff bestehen.

6. Schwingungstilger nach einem der Ansprüche 1 bis 5, dadurch gekennzeichnet, daß die Tilgermasse (2) mit zumindest einem Vorsprung (5) versehen ist, der in eine kongruent gestaltete Aussparung (6) des Befestigungsblechs (1) eingreift.

7. Schwingungstilger nach Anspruch 6, dadurch gekennzeichnet, daß die Aussparung (6) den Vorsprung (5) mit Abstand (12) umgibt.

8. Schwingungstilger nach einem der Ansprüche 1 oder 7, dadurch gekennzeichnet, daß der Vorsprung (5) und/oder die Aussparung (6) mit einer Beschichtung (11) aus elastomerem Werkstoff versehen sind.

9. Schwingungstilger nach einem der Ansprüche 1 bis 8, dadurch gekennzeichnet, daß die Tilgermasse (2) vollständig von elastomerem Werkstoff ummantelt ist.
